# EUROPEAN PATENT APPLICATION

(11) **EP 4 056 007 A1**
(43) Date of publication of application: **14.09.2022**
(21) Application number: 22161477.9
(22) Date of filing: 10.03.2022
(51) Int. Cl.: A01B 69/04

(54) **CONTROL METHOD FOR AN AGRICULTURAL TRACTOR USING TRACTOR IMPLEMENT MANAGEMENT TECHNOLOGY AND AGRICULTURAL TRACTOR IMPLEMENTING THE METHOD**

(30) Priority: 12.03.2021 IT 202100005963
(71) Applicant: CNH Industrial Italia S.p.A., 10135 Torino (IT)
(72) Inventor: Cordioli, Matteo, 37019 Peschiera del Garda (VR) (IT); Giannotta, Gian Marco, 42121 Reggio Emilia (RE) (IT); Mantovani, Michele, 46026 Quistello (MN) (IT)
(74) Representative: CNH Industrial IP Department

(57) **Abstract**

Control method for a tractor (1) having a TIM control unit (7) that is designed to be electrically connected with a number of sensors of an implement (2) and a with navigation system (8) through respective buses (9,10) and is designed to allow bi-directional exchange of control data; the TIM control unit (7) is designed to perform a Tractor Implement Method for acting on electro-mechanical unities of the tractor and controlling tractor functions such as tractor speed, start and stop of the tractor and steering of the tractor based on signals provided by the implement (2) and/or navigation system (8). The method comprises: connecting at least one implement (2) with the TIM control unit (7) through a respective bus (9); connecting a navigation system (8) arranged in the tractor with the tractor control unit (7) through the respective bus (10); generating a selective steering control signal upon manual action on a dedicated steering switch (12) and acting on the TIM control unit (7) so that the steering control of the tractor is provided by the navigation system (8) and at the same time the control of the electro-mechanical unities of the tractor by means of implement (2) remains inactive, (figures 1 and 2)

## Description

### TECHNICAL FIELD

The present invention concerns a control method for an agricultural tractor using Tractor Implement Management technology and an agricultural tractor implementing the method.

### BACKGROUND OF THE INVENTION

According to Tractor Implement Management technology, a bi-directional data connection is established between one implement and a tractor through a dedicated bus. Control data arriving from the implement can control some functions of the tractor such tractor speed, start and stop of the tractor and steering of the tractor. In other words, the tractor controls the implement but also the implement may control some functions of the tractor.

An aim of the present invention is to provide a greater flexibility in Tractor Implement Management technology.

### SUMMARY OF THE INVENTION

The aforementioned aim is reached by a control method for a tractor having a TIM control unit that is designed to be electrically connected with a number of sensors of an implement and a with navigation system through respective ISOBUS buses and is designed to allow bi-directional exchange of control data; said TIM control unit being designed to perform a Tractor Implement Method for acting on electro-mechanical unities of the tractor and controlling tractor functions such as tractor speed, start and stop of the tractor and steering of the tractor based on signals provided by the implement and/or navigation system, the method comprising the following steps:
- connecting at least one implement with the TIM control unit through a respective bus;
- connecting a navigation system arranged in the tractor with the tractor TIM control unit through the respective bus;
- generating a selective steering control signal upon manual action on a dedicated steering switch; and
- acting on the TIM control unit so that the steering control of the tractor is provided by the navigation system and at the same time the control of the electro-mechanical unities of the tractor by means of implement remains inactive.

The present invention also relate to a tractor having a TIM control unit that is designed to be electrically connected with a number of sensors of an implement and with a navigation system through respective buses and is designed to allow bi-directional exchange of control data; said TIM control unit being designed to perform Tractor Implement method for acting on electro-mechanical unities of the tractor and controlling tractor functions such as tractor speed, start and stop of the tractor and steering of the tractor based on signals provided by the implement (2) and/or navigation system,
the tractor being provided with a main switch (B) to provide, once actuated, an acknowledgment signal indicating the presence of a good connection with data exchange of with the TIM control unit; the TIM control unit after acknowledgement controlling the functions of the tractor based on control data CDiprovided by the connected implement;
the tractor being provided with a dedicated steering switch separated from main switch to be manually activated to provide a selective steering control signal;
   - the TIM control unit being so designed that once the selective steering control signal is generated the steering control of the tractor is provided by the navigation system and at the same time the control of the electro-mechanical unities of the tractor by means of implement remains inactive.

### BRIEF DESCRIPTION OF DRAWINGS

For a better understanding of the present invention, a preferred embodiment is described in the following, by way of a non-limiting example, with reference to the attached drawings wherein:
Figure 1 is a schematic representation of an agricultural tractor operating with an implement according to the method of the present invention in a first operative position; and
Figure 2 is a schematic representation of the tractor of figure 1 in a second operative position.

### DETAILED DESCRIPTION OF THE INVENTION

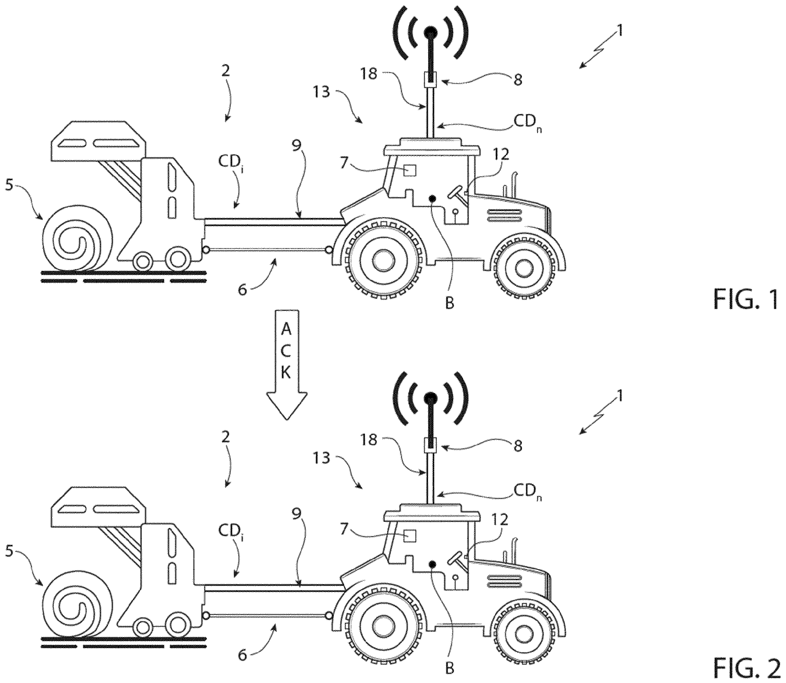

In figures 1 and 2, numeral 1 indicates an agricultural tractor (of a known kind and powered by an internal combustion engine) that is designed to be connected by one or more implement 2. In the example, just one implement 2 is shown. The implement 2 shown according to the example is a baler that is designed to collect hay, cotton or similar dry materials in order to compress collected materials and produce bales 5 of compressed materials, for instance of cylindrical shape. It is however clear that the implement 2 may be different from the one represented. The agricultural tractor 1 is mechanically connected by means of a towing bar 6 with the implement 2 that is typically powered by the torque produced by the engine of the tractor 1. The tractor 1 is provided with a Tractor Implement Management control unit 7 (of known kind) designed to be electrically connected with a number of sensors (not shown) of implement 2 and with a navigation systems 8 through respective buses 9 and 10 designed to allow bidirectional exchange of control data CDi CDn.

It is noted that both implement 2 and navigation system 8 use TIM technology as well to control tractor's functions.

Each bus 9, 10 is an ISO standard, based on the ISO-11783 guidelines, developed to enable the interconnection and communication of tractor and implements built from different manufacturers in a plug-and-play fashion.

The TIM control unit 7 is designed to perform a Tractor Implement Management for acting on electro-mechanical unities of the tractor (for instance powertrain, torque and speed control, etc.) and controlling functions of the tractor such as tractor speed, start and stop of the tractor and steering of the tractor based on control data CDi, CDn provided by the implement 7 and/or by the navigation system 8.

For instance, in the case of a baler 2, sensors are provided to produce control data CDi used for reducing the speed of the tractor once the bale 5 is ready to be released from the implement 2.

According to the known TIM technique there is provided a main switch B placed on the armrest to provide an acknowledgment signal once at least one implement 2 is connected with the TIM control unit 7 through the respective bus 9. In fact, once the physical connections have been duly established the acknowledgment signal is generated indicating the presence of a good connection with data exchange of the implement with the TIM control unit 7. The tractor 1 thus starts to perform a working operation (figure 1) with the towed implement 2 that controls in known way the functions of the tractor 1 according to the known TIM technology based on control data CDi provided by the connected implement 2.

The navigation system 8 arranged in the tractor is also connected with the TIM control unit 7 through the respective bus 10.

If the navigation system 18 is already connected, pressing the main switch B will enable that automation too, i.e. the tractor is controlled by control data CDn.

According to the present invention, a dedicated steering switch 12 separated from main switch B is available in the tractor cabin 13 and may be manually activated to provide a selective steering control signal.

Once the dedicated steering switch 12 is operated the selective connecting signal is generated and such selective signal acts on the TIM control unit 7 so that the steering control of the tractor is provided by the navigation system 8 and at the same time the control of the electro-mechanical unities of the tractor by means of implement 2 remain inactive.

Accordingly, the implement 2 has no control on the tractor 1 and the TIM technology is used to control steering of the tractor 2 only by means of the control data CDn generated by the navigation system 8.

If the main switch B is further activated the unities of the tractors are also controlled by the control data provided by the implement 2 and the normal TIM technology is activated.

In view of the foregoing, the advantages of the method according to the invention are apparent.

The dedicated steering switch 12 permits to the operator to select a partial automation in which only steering function depend on control data CDn. This enhances flexibility in particular working situations, for example end of rows maneuvers when the navigation system 8 is useful but is preferable to avoid control from the implement 2. Operator has more flexibility in deciding which automations to run in a multi-Client scenario, depending on the in-field working being performed. If further on complete automation is needed the main switch is activated.

It is clear that modifications can be made to the described method which do not extend beyond the scope of protection defined by the claims.

### REFERENCE LIST

1 Tractor
2 implement
5 bales
6 towing bar
7 TIM control unit
8 navigation system
9,10 bus
12 dedicated steering switch
13 cabin

## Claims

1. Control method for a tractor (1) having a TIM control unit (7) that is designed to be electrically connected with a number of sensors of an implement (2) and a with navigation system (8) through respective buses (9,10) and is designed to allow bi-directional exchange of control data; said TIM control unit (7) being designed to perform a Tractor Implement Method for acting on electro-mechanical unities of the tractor and controlling tractor functions such as tractor speed, start and stop of the tractor and steering of the tractor based on signals provided by the implement (2) and/or navigation system (8), the method comprising the following steps:
- connecting at least one implement (2) with the TIM control unit (7) through a respective bus (9);
- connecting a navigation system (8) arranged in the tractor with the tractor control unit (7) through the respective bus (10);
- generating a selective steering control signal upon manual action on a dedicated steering switch (12) and
- acting on the TIM control unit (7) so that the steering control of the tractor is provided by the navigation system (8) and at the same time the control of the electro-mechanical unities of the tractor by means of implement (2) remain inactive.

2. Control method as claimed in claim 1 wherein, upon further acting on a main switch (B) an acknowledgment signal indicating a connection with a full control data exchange of the implement with the TIM control unit (7) is generated; the phase of controlling the electro-mechanical unities of the tractor based on control data provided by the connected implement is actuated.

3. Tractor (1) having a TIM control unit (7) that is designed to be electrically connected with a number of sensors of an implement (2) and with a navigation system (8) through respective buses (9,10) and is designed to allow bi-directional exchange of control data; said TIM control unit (7) being designed to perform Tractor Implement Method for acting on electro-mechanical unities of the tractor and controlling tractor functions such as tractor speed, start and stop of the tractor and steering of the tractor based on signals provided by the implement (2) and/or navigation system (8),
the tractor being provided with a main switch (B) to provide, once actuated, an acknowledgment signal indicating the presence of a good connection with data exchange of the implement with the TIM control unit (7); the TIM control unit (7) after acknowledgement controlling the functions of the tractor (1) based on control data CDi provided by the connected implement (2);
the tractor being provided with a dedicated steering switch (12) separated from main switch (B) to be manually activated to provide a selective steering control signal;
- the TIM control unit (7) being so designed that once the selective steering control signal is generated the steering control of the tractor is provided by the navigation system (8) and at the same time the control of the electro-mechanical unities of the tractor by means of implement (2) remains inactive.

4. Tractor as defined in claim 1 wherein, once an action on the main switch (B) is performed, the TIM control unit (7) is designed to control the electro-mechanical unities of the tractor based on control data provided by the connected implement.
